# EUROPÄISCHE PATENTANMELDUNG

(11) **EP 3 530 683 A1**
(43) Veröffentlichungstag der Anmeldung: **28.08.2019**
(21) Anmeldenummer: 18158908.6
(22) Anmeldetag: 27.02.2018
(51) Int. Cl.: C08G 18/62, C08G 18/79, C08G 18/22, C08G 18/24, B01J 35/10

(54) **VERFAHREN UND SYSTEM ZUR HERSTELLUNG EINES POLYURETHANPOLYMERS MITTELS GETRÄGERTEM KATALYSATOR**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Ein Verfahren zur Herstellung eines Polyurethanpolymers umfasst den Schritt:
I) Vermischen einer ersten Eduktkomponente (100) umfassend ein Polyisocyanat mit einer zweiten Eduktkomponente (200) umfassend eine Verbindung mit Zerewitinoff-aktive Verbindung in einem Mischbehälter (300), wobei eine Reaktionsmischung (400) erhalten wird,
wobei die erste Eduktkomponente (100) und/oder die zweite Eduktkomponente (200) vor dem Vermischen in dem Mischbehälter (300) mit einem Katalysatorbett (500) kontaktiert werden und/oder die Reaktionsmischung (400) mit einem Katalysatorbett (500) kontaktiert wird, wobei das Katalysatorbett (500) einen auf einem Substrat reversibel sorbierten Katalysator enthält, der Katalysator die Reaktion von Isocyanatgruppen mit sich selbst oder mit Zerewitinoff-aktiven Verbindungen katalysiert und der Katalysator in die das Katalysatorbett (500) kontaktierende erste Komponente (100), zweite Komponente (200) oder Reaktionsmischung (400) freigesetzt wird, so dass eine den Katalysator enthaltende Reaktionsmischung (410) erhalten wird.

## Beschreibung

Die vorliegende Erfindung betrifft ein Verfahren zur Herstellung eines Polyurethanpolymers, umfassend den Schritt des Vermischens einer ersten Eduktkomponente umfassend ein Polyisocyanat mit einer zweiten Eduktkomponente umfassend eine Verbindung mit Zerewitinoff-aktive Verbindung in einem Mischbehälter, wobei eine Reaktionsmischung erhalten wird. Die erste Eduktkomponente und/oder die zweite Eduktkomponente werden vor dem Vermischen in dem Mischbehälter mit einem Katalysatorbett kontaktiert und/oder die Reaktionsmischung wird mit einem Katalysatorbett kontaktiert. Die Erfindung betrifft ebenfalls ein System zur Herstellung eines Polyurethanpolymers mit einem Katalysatorbett.

Handelsübliche 2K-PUR-Systeme haben generell das Problem, dass mit der Vermischung von Polyol und Polyisocyanat die Härtungsreaktion beginnt. Daher charakterisieren zwei wesentliche anwendungstechnische Eigenschaften diese Systeme: die Verarbeitungszeit und die Trocknungszeit. Für effiziente Prozesse ist eine schnelle Trocknung gewünscht. Dazu wird das System üblicherweise mit Katalysatoren wie DBTL beschleunigt und zwar in dem Maße, dass noch eine ausreichende Verarbeitungszeit, zum Beispiel für die Sprühapplikation bei der Autoreparaturlackierung, gegeben ist. Hierbei wird das benötigte Lackmaterial zu Beginn der Arbeiten vermischt und für die gesamte Lackierung benutzt.

Dieses hat jedoch den Nachteil, dass bei einer Unterbrechung der Arbeit der Viskositätsanstieg in der Lackformulierung aufgrund der Anwesenheit des Katalysators weiter fortschreitet. Dann müsste nach Ablauf der Verarbeitungszeit noch nicht aufgetragener Lack entsorgt werden.

In heterogen katalysierten chemischen Reaktionen lässt sich der immobilisierte Katalysator von der Reaktionsmischung leicht abtrennen. So betrifft WO 2005/042604 A1 ein Verfahren zur Herstellung von Isocyanatgruppen enthaltenden Prepolymeren durch Umsetzung von a) Diisocyanaten mit b) Verbindungen mit mindestens zwei mit Isocyanatgruppen reaktiven Wasserstoffatomen in Gegenwart von c) Katalysatoren und nachfolgende Abtrennung der überschüssigen monomeren Diisocyanate, wobei als Diisocyanate a) asymmetrische Diisocyanate und als Katalysatoren c) metallorganischen Katalysatoren eingesetzt werden und diese metallorganischen Katalysatoren vor der Abtrennung der monomeren Diisocyanate entfernt, blockiert oder deaktiviert werden. Gemäß dort beschriebener Ausführungsformen können die Katalysatoren heterogene Katalysatoren sein und auf einem Träger aufgebracht sein.

Ein Beispiel in WO 2005/042604 A1 beschreibt die Herstellung eines heterogenen Katalysators wie folgt: 6.25 g von Dibutylzinndilaurat wurden mit absolutem Ethanol auf 23 ml Gesamtlösung ergänzt. Unter leichtem Rühren wurden 25 g von kommerziell erhältlichem TIMREX HSAG 100 Graphit zur Imprägnierlösung gegeben. Der Träger wurde somit entsprechend seiner Ethanolaufnahmekapazität (0.92 ml/g) mit der Imprägnierlösung getränkt. Nach 1 h Tränkzeit wurde der Katalysator für 16 h bei 50 °C im Trockenschrank getrocknet. Die Herstellung des Prepolymeren wird wie folgt beschrieben: es wurden bei einem festen molaren 2,4'-MDI : PPG450-Verhältnis von 7 : 1 0.015 Gew. -%, bezogen auf die Gesamtansatzmenge an Polyol- und Isocyanatkomponente, des heterogenen DBTL-Aktivkohle-Katalysators dem 2,4'-MDI zugesetzt und im Anschluss an die Prepolymersynthese durch Filtration aus dem Reaktionsgemisch entfernt.

Für den Zweck der in WO 2005/042604 A1 beschriebenen Erfindung ist es notwendig, dass der Urethanisierungskatalysator möglichst vollständig aus der Reaktionsmischung wieder entfernt wird, da ansonsten eine unerwünschte Weiterreaktion zu höhermolekularen Prepolymeren während der Lagerung des Produkts zu erwarten wäre. Daher lässt sich das Konzept von WO 2005/042604 A1 nicht auf die Applikation von über einen längeren Zeitraum reagierenden Polyurethansystemen, wie sie in Lacken und sonstigen Beschichtungen eingesetzt werden, übertragen.

Die vorliegende Erfindung hat sich die Aufgabe gestellt, die Nachteile im Stand der Technik wenigstens teilweise zu überwinden. Insbesondere hat sie sich die Aufgabe gestellt, ein Verfahren und System bereitzustellen, mit dem die Verarbeitung von 2-Komponenten-Polyurethanlacken (2K-PUR-Lacken) unterbrochen werden kann, ohne dass noch nicht aufgetragener Lack aufgrund zwischenzeitlich zu hoch gewordener Viskosität als unbrauchbar entsorgt werden müsste.

Erfindungsgemäß gelöst wird die Aufgabe durch ein Verfahren gemäß Anspruch 1 und ein System gemäß Anspruch 11. Vorteilhafte Weiterbildungen sind in den Unteransprüchen angegeben. Sie können beliebig kombiniert werden, sofern sich aus dem Kontext nicht eindeutig das Gegenteil ergibt.

Ein Verfahren zur Herstellung eines Polyurethanpolymers umfasst den Schritt:
I) Vermischen einer ersten Eduktkomponente umfassend ein Polyisocyanat mit einer zweiten Eduktkomponente umfassend eine Verbindung mit Zerewitinoff-aktiven Wasserstoffatomen in einem Mischbehälter, wobei eine Reaktionsmischung erhalten wird,
wobei die erste Eduktkomponente und/oder die zweite Eduktkomponente vor dem Vermischen in dem Mischbehälter mit einem Katalysatorbett kontaktiert werden und/oder die Reaktionsmischung mit einem Katalysatorbett kontaktiert wird, wobei das Katalysatorbett einen auf einem Substrat reversibel sorbierten Katalysator enthält, der Katalysator die Reaktion von Isocyanatgruppen mit sich selbst oder mit Zerewitinoff-aktiven Verbindungen katalysiert und der Katalysator in die das Katalysatorbett kontaktierende erste Komponente, zweite Komponente oder Reaktionsmischung freigesetzt wird, so dass eine den Katalysator enthaltende Reaktionsmischung erhalten wird.

Im erfindungsgemäßen Verfahren wird ein Katalysatorbett eingesetzt, welches einen auf einem Substrat reversibel sorbierten Katalysator enthält. Als Katalysatorbett wird hierbei ein definiertes Volumen angesehen, welches Substrat und Katalysator enthält und welches das Substrat nicht verlassen kann (beispielsweise durch Verwendung von Siebeinsätzen).

Es ist erfindungsgemäß vorgesehen, dass der Katalysator reversibel auf dem Substrat sorbiert ist. Hierbei kann sowohl eine Adsorption als auch eine Absorption in Frage kommen. Die Sorption kann dadurch erfolgen, dass das Substrat mit einer Lösung des Katalysators getränkt wird und anschließend das Lösungsmittel verdampft wird. Dass die Sorption reversibel ist, bedeutet, dass sorbierter Katalysator auch wieder an eine flüssige Phase in einer zur Katalyse der Reaktion wirksamen Menge abgegeben werden kann. Daher ist es auch bevorzugt, dass das Substrat nicht Graphit oder Aktivkohle ist.

Geeignete Substrate können feste Katalysatoren und Katalysatorträger, wie sie aus der heterogenen Katalyse bekannt sind, sein. Hierunter fallen auch Zeolithe/Molekularsiebe wie Zeolith A und Zeolith X und sonstige poröse Keramiken. Beispiele für geeignete Katalysatoren sind Titan-, Zirkonium-, Bismut-, Zinn- und/oder eisenhaltige Katalysatoren. Bevorzugt sind Dialkylzinndicarboxylate und Bismutcarboxylate.

Die Beladung des Substrats mit dem Katalysator kann in einem Bereich von ≥ 1 bis ≤ 50 Gewichts- %, bezogen auf das Gesamtgewicht des katalysatorbeladenen Substrats, betragen. Bevorzugt sind Beladungen von ≥ 5 bis ≤ 30 Gewichts-%, mehr bevorzugt ≥ 10 bis ≤ 20 Gewichts-%.

Das erfindungsgemäße Verfahren hat den Vorteil, dass die Reaktionsmischung mit Katalysator versehen werden kann, wenn dieses gewünscht wird, aber die Katalysatorzugabe auch gestoppt werden kann. So kann in dem Mischbehälter die Reaktionsmischung ohne Katalysator deutlich länger aufbewahrt werden und erst bei Bedarf durch das Katalysatorbett geleitet werden, um die Reaktion zu beschleunigen.

Das erfindungsgemäße Verfahren kann zum Beispiel mittels einer modifizierten Sprühpistole durchgeführt werden. Die erste und zweite Eduktkomponente werden hierbei in einem Vorratsbehälter gemischt, enthalten jedoch noch keinen Katalysator. Durch Druckluft oder Ansaugen wird diese Reaktionsmischung in eine Austragsleitung zur Düse befördert. Hierbei passiert die Reaktionsmischung das Katalysatorbett und wird auf diese Weise mit dem benötigten Katalysator versehen. Muss der Lackiervorgang unterbrochen werden, reagiert die im Vorratsbehälter befindliche Reaktionsmischung mangels Katalysator nicht oder nur sehr langsam.

Als Zerewitinoff-aktive Verbindungen oder Verbindungen mit Zerewitinoff-aktiven Wasserstoffatomen (nachfolgend auch NCO-reaktive Verbindungen genannt) eignen sich insbesondere Polyole, Polyamine und Polythiole. Bevorzugt werden solche Verbindungen, die mit Polyisocyanaten bei in der Beschichtungstechnologie üblichen Bedingungen zu Polyadditionsverbindungen, insbesondere Polyurethanen, reagieren. Hierunter fallen zum Beispiel Verbindungen, welche eine mittlere OH-Funktionalität von mindestens 1.5 aufweisen. Dieses können beispielsweise niedermolekulare Diole (z.B. 1,2-Ethandiol, 1,3- bzw. 1,2-Propandiol, 1,4-Butandiol), Triole (z.B. Glycerin, Trimethylolpropan) und Tetraole (z.B. Pentaerythrit) sein, Polythiole aber auch Polyhydroxyverbindungen wie Polyetherpolyole, Polyesterpolyole, Polyurethanpolyole (OH-terminierte Prepolymere), Polysiloxanpolyole, Polycarbonatpolyole, Polybutadienpolyole, Polyacrylatpolyole und/oder Polymethacrylatpolyole sowie deren Mischpolymerisate (im Folgenden Polyacrylatpolyole genannt) sein.

Geeignete Polyole weisen bevorzugt massenmittlere Molekulargewichte Mw von > 500 Dalton, gemessen mittels Gelpermeationschromatographie (GPC) nach DIN 55672-1:2016-03 in Tetrahydrofuran bei 25 °C gegen einen Polystyrolstandard, besonders bevorzugt zwischen 800 und 100000 Dalton, insbesondere zwischen 1000 und 50000 Dalton auf. Geeignete Polyhydroxyverbindungen weisen bevorzugt eine OH-Zahl (DIN EN ISO 4629-2:2016) von 30 bis 400 mg KOH/g, insbesondere zwischen 100 und 300 KOH/g, auf.

Die Zerewitinoff-aktive Verbindung ist vorzugsweise ausgewählt aus der Gruppe bestehend aus Polyacrylatpolyolen und Polyesterpolyolen, insbesondere Polyacrylatpolyole.

Als Polyisocyanat eigenen sich alle dem Fachmann für die Herstellung von Polyisocyanat-Polyadditionsprodukten, insbesondere Polyurethanen, als geeignet bekannte Polyisocyanate, insbesondere die Gruppe der organischen aliphatischen, cycloaliphatischen, araliphatischen und/oder aromatischen Polyisocyanate mit mindestens zwei Isocyanatgruppen pro Molekül sowie Gemische davon. Beispiele für derartige Polyisocyanate sind Di- oder Triisocyanate, wie z.B. 1,4-Butandiisocyanat, 1,5-Pentandiisocyanat (Pentamethylendiisocyanat, PDI), 1,6-Hexandiisocyanat (Hexamethylendiisocyanat, HDI), 4-Isocyanatomethyl-1,8-octandiisocyanat (Triisocyanatononan, TIN), 4,4'-Methylenbis(cyclohexylisocyanat) (H12MDI), 3,5,5-Trimethyl-1-isocyanato-3-isocyanatomethylcyclohexan (Isophorondiisocyanat, IPDI), 1,3- sowie 1,4-Bis(isocyanatomethyl)cyclohexan (H6XDI), 1,5 Naphthalindiisocyanat, Diisocyanatodiphenylmethan (2,2'-, 2,4'- und 4,4'-MDI oder Mischungen daraus), Diisocyanatomethylbenzol (2,4- und 2,6-Toluylendiisocyanat, TDI) und technische Gemische der beiden Isomeren sowie 1,3 und/oder 1,4-Bis(isocyanatomethyl)benzol (XDI), 3,3'-Dimethyl-4,4'-biphenyldiisocyanat (TODI), 1,4-Paraphenylendiisocyanat (PPDI), 1,3-Tetramethylxylylendiisocyanate (TMXDI) sowie Cyclohexyldiisocyanat (CHDI) und die aus vorgenannten, einzeln oder in Mischung erhältlichen, höhermolekularen Oligomeren mit Biuret-, Uretdion-, Isocyanurat-, Iminooxadiazindion-, Allophanat-, Urethan- sowie Carbodiimid/Uretonimin-Struktureinheiten. Bevorzugt werden Polyisocyanate auf Basis aliphatischer und cycloaliphatischer Diisocyanate eingesetzt. Besonders bevorzugt ist das mindestens eine Polyisocyanat ein Derivat des Hexamethylendiisocyanats und/oder des Pentamethylendiisocyanats, insbesondere ein Hexamethylendiisocyanat-Trimer und/oder ein Pentamethylendiisocyanat-Trimer. In einer anderen bevorzugten Ausführungsform kann das Polyisocyanat eine oder mehrere hydrophilierend wirkende Gruppen wie beispielsweise Polyethyenloxideinheiten oder neutralisierte Sulfonatgruppen enthalten. Es ist auch möglich, dass das Polyisocyanat ein NCO-terminiertes Prepolymer ist.

Vorzugsweise beträgt das Verhältnis von Polyisocyanaten zu NCO-reaktiven Verbindungen, bezogen auf die Stoffmengen der Polyisocyanatgruppen zu den NCO-reaktiven Gruppen, 0.5 zu 1.0 bis 3.0 zu 1.0. Besonders bevorzugt ist ein Verhältnis von 0.9 zu 1.0 bis 1.5 zu 1.0. Ganz besonders bevorzugt ist ein Verhältnis von 1.05 zu 1.0 bis 1.5 zu 1.0.

Vorzugsweise umfasst die Reaktionsmischung mindestens eine NCO-reaktive Verbindung ausgewählt aus der Gruppe bestehend aus Polyacrylatpolyolen und Polyesterpolyolen und mindestens ein Polyisocyanat, wobei das Polyisocyanat ein Derivat des Hexamethylendiisocyanats und/oder des Pentamethylendiisocyanats ist. Weiter bevorzugt enthält die Reaktionsmischung als NCO-reaktive Verbindung ein Polyacrylatpolyol und als Polyisocyanat ein Derivat des Hexamethylendiisocyanats und/oder des Pentamethylendiisocyanats. Besonders bevorzugt enthält die Reaktionsmischung als NCO-reaktive Verbindung Polyacrylatpolyol und als Polyisocyanat ein Hexamethylendiisocyanat-Trimer und/oder ein Pentamethylendiisocyanat-Trimer.

Die Reaktionsmischung kann weiterhin Zusatzmittel, zum Beispiel Lichtschutzmittel wie UV-Absorber und sterisch gehinderte Amine (HALS) enthalten, weiterhin Stabilisatoren, Füllstoffe, Pigmente sowie Antiabsetzmittel, Entschäumungs-, Antikrater- und/oder Netzmittel, Verlaufsmittel, filmbildende Hilfsmittel, Reaktivverdünner, Lösemittel, Substanzen zur Rheologiesteuerung, Slipadditive und/oder Komponenten, die das Anschmutzen verhindern und/oder die Reinigungsfähigkeit der ausgehärteten Beschichtungen verbessern, ferner Mattierungsmittel.

Gemäß einer Ausführungsform des Verfahrens wird ein Strom der ersten Eduktkomponente mit einem Strom der zweiten Eduktkomponente in einem Mischer vereinigt, wobei ein Strom der Reaktionsmischung erhalten wird und wenigstens ein Strom ausgewählt aus dem Strom der ersten Eduktkomponente, dem Strom der zweiten Eduktkomponente und dem Strom der Reaktionsmischung strömt durch das Katalysatorbett, so dass der Katalysator in den durch das Katalysatorbett durchströmenden Strom freigesetzt wird. Diese Ausführungsform des erfindungsgemäßen Verfahrens ist vorzugsweise ein kontinuierliches Verfahren. Geeignete Mischer können neben einfachen T-Mischern auch die aus der Polyurethan-Technologie bekannten statischen und dynamischen Mischköpfe sein.

In einer weiteren Ausführungsform des Verfahrens wird der Katalysator derart freigesetzt, dass die den Katalysator enthaltende Reaktionsmischung den Katalysator in einem Anteil von ≥ 1 ppm bis ≤ 5000 ppm, bezogen auf das Gewicht der Reaktionsmischung, enthält. Bevorzugt ist ein Anteil von ≥ 10 ppm bis ≤ 1000 ppm, mehr bevorzugt ≥ 50 ppm bis ≤ 500 ppm.

In einer weiteren Ausführungsform des Verfahrens kontaktiert die Reaktionsmischung das Katalysatorbett und die erste und zweite Eduktkomponente kontaktieren das Katalysatorbett nicht. Somit liegt das Katalysatorbett in Strömungsrichtung der auszutragenden Reaktionsmischung nach einem Mischbehälter oder Mischkopf.

In einer weiteren Ausführungsform des Verfahrens enthalten die erste und zweite Eduktkomponente vor dem Vermischen im Mischbehälter keinen Katalysator.

In einer weiteren Ausführungsform des Verfahrens umfasst das Substrat im Katalysatorbett Partikel, welche Kanäle aufweisen, die in mindestens einer Raumrichtung eine Ausdehnung von ≥ 1 Angström bis ≤ 50 Angström, bevorzugt ≥ 1,5 Angström bis ≤ 30 Angström und mehr bevorzugt ≥ 2,5 Angström bis ≤ 20 Angström aufweisen. Die Partikel können eine maximale Längenausdehnung von ≥ 0.1 cm bis ≤ 3 cm, bevorzugt ≥ 0.5 cm bis ≤ 2,5 cm aufweisen und sphärisch oder sphäroid geformt sein. Solche Substrate sind als Natrium-Aluminium-Silikat-Molekularsiebe kommerziell erhältlich.

In einer weiteren Ausführungsform des Verfahrens wird als Katalysator Dimethylzinndilaurat, Dibutylzinndilaurat, Dioctylzinndilaurat, Zinn-bis(dodecylmercaptid), Zinn-bis(2-ethylhexylthioglycolat), Zinndiacetat, Zinnmaleat, Zinn-bisthioglycerol, Octylzinn-tris(2-ethylhexylthioglycolat), Bis(β-methoxycabonylethyl)zinndilaurat, Tetraisopropyltitanat, Tetra-tert-butylorthotitanat, Tetra(2-ethylhexyl)titan und Titan-bis-(ethylacetoacetato) diisopropoxid, Bismut (III)-tris(2-ethylhexanoat), Bismutlaurat oder deren Mischungen ausgewählt.

In einer weiteren Ausführungsform des Verfahrens liegt das Katalysatorbett in Form wenigstens einer austauschbaren Kartusche vor. Sollte bei einer Unterbrechung der Arbeit das Katalysatorbett durch polymerisiertes Harz unbrauchbar geworden sein, muss nur eine frische Kartusche eingesetzt werden. Das Gleiche gilt für den Fall, dass wegen des Umfangs der Arbeit das Katalysatorbett ausgelaugt ist und keinen Katalysator mehr freisetzen kann.

In einer weiteren Ausführungsform des Verfahrens liegt das Katalysatorbett in Form einer Mehrzahl von gegeneinander fluidisch abgedichteten Kanälen vorliegt, welche Substrate und hierauf sorbierten Katalysator enthalten und welche unabhängig voneinander auf Anweisung einer Steuerungseinheit von der erste Eduktkomponente, der zweite Eduktkomponente oder der Reaktionsmischung durchströmt werden. Auf diese Weise kann eine gleichmäßigere Freisetzung des Katalysators über einen längeren Zeitraum erreicht werden. Wenn die Steuerungseinheit bestimmt, dass in einem Kanal kein freizusetzender Katalysator mehr vorliegt, wird auf einen anderen Kanal umgeschaltet und die Freisetzung des Katalysators kann fortgesetzt werden.

In einer weiteren Ausführungsform des Verfahrens wurde das Katalysatorbett vor Beginn des Verfahrens mit einem Lösungsmittel gespült. So kann vermieden werden, dass zu Beginn des Kontaktierens des Katalysatorbetts eine ungewollt große Menge des Katalysators freigesetzt wird.

Die Erfindung betrifft ebenfalls ein System zur Herstellung eines Polyurethanpolymers, umfassend einen Mischbehälter zum Vermischen einer ersten und zweiten Eduktkomponente unter Erhalt eines einer Reaktionsmischung, wobei das System wenigstens ein Katalysatorbett aufweist, welches von der ersten oder zweiten Eduktkomponente vor dem Eintreten in den Mischbehälter kontaktiert wird und/oder welches von der Reaktionsmischung vor dem Verlassen des Mischbehälters kontaktiert wird und wobei das Katalysatorbett einen auf einem Substrat reversibel sorbierten Katalysator zur Katalyse der Reaktion von Isocyanatgruppen mit sich selbst oder mit Zerewitinoff-aktiven Verbindungen enthält. Zu den Details bezüglich Reaktionskomponente, Katalysatoren, Substraten und dergleichen sei zur Vermeidung von Wiederholungen auf die vorstehenden Ausführungen zum erfindungsgemäßen Verfahren verwiesen.

In einer Ausführungsform des Systems liegt das Katalysatorbett in Form wenigstens einer austauschbaren Kartusche vor. Wie bereits erwähnt wird hierdurch die Flexibilität des Systems erhöht. Sollte bei einer Unterbrechung der Arbeit das Katalysatorbett durch polymerisiertes Harz unbrauchbar geworden sein, muss nur eine frische Kartusche eingesetzt werden. Das Gleiche gilt für den Fall, dass wegen des Umfangs der Arbeit das Katalysatorbett ausgelaugt ist und keinen Katalysator mehr freisetzen kann.

In einer weiteren Ausführungsform des Systems liegt das Katalysatorbett in Form einer Mehrzahl von gegeneinander fluidisch abgedichteten Kanälen vor, welche Substrate und hierauf sorbierten Katalysator enthalten und welche unabhängig voneinander auf Anweisung einer Steuerungseinheit von der erste Eduktkomponente, der zweite Eduktkomponente oder der Reaktionsmischung durchströmt werden. Wie bereits erwähnt kann auf diese Weise kann eine gleichmäßigere Freisetzung des Katalysators über einen längeren Zeitraum erreicht werden. Wenn die Steuerungseinheit bestimmt, dass in einem Kanal kein freizusetzender Katalysator mehr vorliegt, wird auf einen anderen Kanal umgeschaltet und die Freisetzung des Katalysators kann fortgesetzt werden.

In einer weiteren Ausführungsform des Systems ist das System als Spritzpistole ausgeführt mit einer Leitung zum Transport der Reaktionsmischung aus dem Mischbehälter zu einer Düse und das Katalysatorbett ist in dieser Leitung angeordnet.

In einer weiteren Ausführungsform des Systems ist der Mischbehälter als Mischkopf ausgeführt, welcher einen Strom der ersten Eduktkomponente mit einem Strom der zweiten Eduktkomponente vermischt, wobei ein Strom der Reaktionsmischung erhalten wird und wenigstens ein Strom ausgewählt aus dem Strom der ersten Eduktkomponente, dem Strom der zweiten Eduktkomponente und dem Strom der Reaktionsmischung durch das Katalysatorbett strömt, so dass der Katalysator in den durch das Katalysatorbett durchströmenden Strom freigesetzt wird.

Die Erfindung wird anhand der nachfolgenden Figuren weiter beschrieben, ohne jedoch darauf beschränkt zu sein. Es zeigen:
- FIG. 1 und 2: schematisch erfindungsgemäße Systeme in Form einer Spritzpistole
- FIG. 3, 4 und 5: schematisch erfindungsgemäße Systeme in Form eines Mischkopfes

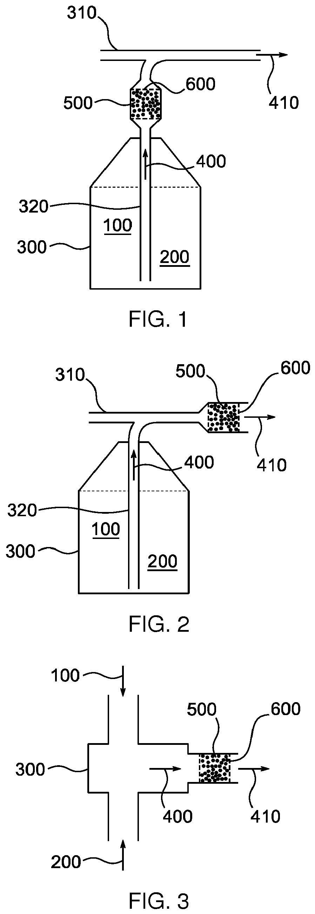

FIG. 1 zeigt ein erfindungsgemäßes System in Form einer Spritzpistole. Im Mischbehälter 300 liegt bereits eine Reaktionsmischung 400 der ersten Eduktkomponente 100 umfassend ein Polyisocyanat und der zweiten Eduktkomponente 200 umfassend ein Polyol vor. Wird Druckluft an das Leitungsstück 310 angelegt, führt dieses dazu, dass Reaktionsmischung 400 in das Ansaugrohr 320 gesogen wird. Die Reaktionsmischung 400 passiert das Katalysatorbett 500, welches in einer auswechselbaren Kartusche 600 im Strömungsverlauf der Reaktionsmischung 400 angeordnet ist. Beim Passieren des Katalysatorbetts wird Katalysator an die Reaktionsmischung abgegeben, so dass katalysatorhaltige Reaktionsmischung 410 aus der Spritzpistole austreten kann. Diese Reaktionsmischung 410 kann dann als Lack auf eine Oberfläche aufgetragen werden. Die Kartusche 600 kann zum Beispiel durch zwei an ihren Enden angebrachte Schraubgewinde in die Leitung 320 eingebracht werden.

FIG. 2 zeigt ein weiteres erfindungsgemäßes System in Form einer Spritzpistole. m Mischbehälter 300 liegt bereits eine Reaktionsmischung 400 der ersten Eduktkomponente 100 umfassend ein Polyisocyanat und der zweiten Eduktkomponente 200 umfassend ein Polyol vor. Wird Druckluft an das Leitungsstück 310 angelegt, führt dieses dazu, dass Reaktionsmischung 400 in das Ansaugrohr 320 gesogen wird. Die Reaktionsmischung 400 passiert das Katalysatorbett 500, welches in einer auswechselbaren Kartusche 600 im Strömungsverlauf der Reaktionsmischung 400 angeordnet ist. Beim Passieren des Katalysatorbetts wird Katalysator an die Reaktionsmischung abgegeben, so dass katalysatorhaltige Reaktionsmischung 410 aus der Spritzpistole austreten kann. Diese Reaktionsmischung 410 kann dann als Lack auf eine Oberfläche aufgetragen werden. Die Kartusche 600 kann zum Beispiel durch zwei an ihren Enden angebrachte Schraubgewinde in die Leitung 320 eingebracht werden. Im Gegensatz zur in FIG. 1 gezeigten Spritzpistole ist die Kartusche 600 mit dem Katalysatorbett 500 näher in Richtung Düse angeordnet. Je nach Anwendung kann die Kartusche 600 auch die Auftragsdüse für den Lack darstellen.

FIG. 3 zeigt ein erfindungsgemäßes System, welches für kontinuierliche Anwendungen geeignet ist. Der Mischbehälter ist hierbei als Mischkopf 300 ausgeführt, in den ein Strom der ersten Eduktkomponente 100 umfassend ein Polyisocyanat und ein Strom der zweiten Eduktkomponente 200 umfassend ein Polyol eintreffen, vermischt werden und die nicht katalysatorhaltige Reaktionsmischung 400 bilden. Der Strom dieser Reaktionsmischung 400 passiert das Katalysatorbett 500, welches in einer auswechselbaren Kartusche 600 im Strömungsverlauf der Reaktionsmischung 400 angeordnet ist. Beim Passieren des Katalysatorbetts wird Katalysator an die Reaktionsmischung abgegeben, so dass katalysatorhaltige Reaktionsmischung 410 aus der austreten kann. Diese Reaktionsmischung 410 kann dann als Lack auf eine Oberfläche aufgetragen werden. Die Kartusche 600 kann zum Beispiel durch zwei an ihren Enden angebrachte Schraubgewinde zwischen Mischkopf-Ausgang und weiteren Leitungen eingebracht werden.

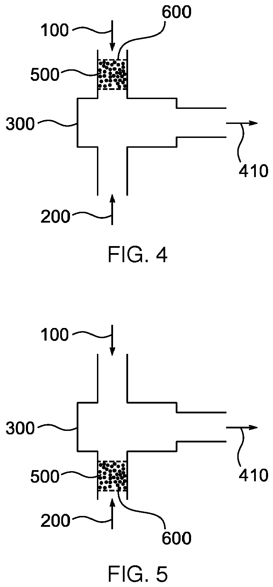

FIG. 4 und 5 zeigen Varianten der Positionierung der Kartusche 600 gegenüber der in FIG. 3 gezeigten Ausführungsform. In FIG. 4 ist die Kartusche im Strömungsverlauf der ersten Eduktkomponente 100 vor dem Eintreten in den Mischkopf 300 angeordnet. In FIG. 5 ist die Kartusche im Strömungsverlauf der zweiten Eduktkomponente 200 vor dem Eintreten in den Mischkopf 300 angeordnet.

Die Erfindung wird anhand der nachfolgenden Beispiele näher erläutert, ohne jedoch darauf beschränkt zu sein. Das in den Beispielen 1 und 2 verwendete Substrat war Sylobead MS 548, ein Molekularsieb vom Typ 13X mit einer Porenweite von ca. 10 Angström und einer durchschnittlichen Partikelgröße von 1.5 mm. Die Isocyanatkomponente (B) und die Polyolkomponente (A) hatten die folgenden Zusammensetzungen (Angaben in Gewichtsteilen):

| **Komponente A** | |
|---|---|
| Setalux D A HS 1272 (ca.72% in BA); Polyacrylatpolyol | 137,75 |
| Tego Airex 945 | 0,50 |
| Tinuvin 292 (50%ig in Butylacetat) | 1,48 |
| Tinuvin 384 - 2 (50%ig in Butylacetat) | 2,20 |
| Butylacetat | 4,35 |
| Butylacetat / Methoxypropylacetat / Xylol (1/1/1) | 20,35 |

| **Komponente B** | |
|---|---|
| Desmodur N 3900; aliphatisches Polyisocyanat-Harz auf Basis HDI | 47,63 |
| BuAc / MPA / Xylol (1/1/1) | 35,70 |
| **Summe** | 249,96 |

In den Beispielen bedeuten die Abkürzungen "BA" und "BuAc" jeweils Butylacetat. "MPA" steht für Methoxypropylacetat.

Die Auslaufzeiten in Sekunden (s) wurden mit einem 4 mm DIN-Becher in Anlehnung an DIN EN ISO 2431 bestimmt. RT: Raumtemperatur (20 °C).

Die Auslaufzeit als Maß zur Beschreibung des Reaktionsverlaufs wurde direkt nach Vermischen sowie bis zu mehreren Stunden danach verfolgt. Die erfindungsgemäßen Proben zeigten im Vergleich zur unkatalysierten Variante eine beschleunigte Reaktion.

Die Angaben "T1" und "T3" betreffen die Verfolgung des Trockengrades der aufgerakelten Beschichtungen nach DIN EN ISO 9117-5. Die Lacke wurden mit einem Rakel auf eine Glasplatte appliziert und (a) bei Raumtemperatur (RT, 23 °C, 50 % rel. Feuchte) sowie (b) in einem Hereaus-Umluftofen 30 min. bei 60 °C vorgetrocknet und danach die Erreichung des Trockengrades bei Raumtemperatur (23 °C, 50 % rel. Feuchte) über die Zeit verfolgt.

### Beispiel 1

30 g des Substrats Sylobead MS 548 enthaltend 6 g (20 Gewichts-%) DBTL (Dibutylzinndilaurat) wurden verwendet. In Versuchen Nr. 1-1 bis 1-4 wurden jeweils 250 g des Lackmaterials über ein Schnellsieb gegossen, in dem sich das geträgerte Katalysatormaterial befand und danach zwecks Prüfung wieder aufgefangen. Nr. 1-5 ist ein Vergleichsbeispiel ohne Katalyse der Reaktionsmischung.

Die Abgabe des Katalysators an das Lackmaterial erfolgte derart, dass eine erhöhte Reaktivität und Trocknungsgeschwindigkeit auch noch beim Durchlauf der vierten Portion des Lackmaterials erkennbar war:

| Nr. | | 1-1 | 1-2 | 1-3 | 1-4 | 1-5 (Vergleich) |
|---|---|---|---|---|---|---|
| Einwaage vor Durchlauf [g] | | 250 | 250 | 250 | 250 | - |
| Auslaufzeit [s] | 0 h | 25 | 25 | 25 | 25 | 25 |
| | 0,5 h | > 100 | 58 | 35 | 31 | 25 |
| | 1,0 h | - | > 100 | 78 | 50 | 25 |
| | 1,5 h | - | - | > 100 | 100 | 26 |
| Trocknung [h] bei RT | T 1 | 1 | 1 | 2 | 2 | > 6 |
| | T 3 | 2 | 4,5 | 7 | > 7 | > 7 |
| Trocknung [h] nach 30 min. bei 60 °C | T 1 | sofort | sofort | sofort | sofort | sofort |
| | T 3 | sofort | sofort | sofort | sofort | > 6 |

### Beispiel 2: Vergleich konventionell katalysierter Lacksysteme (Nr. 1-3) mit geträgertem Katalysatormaterial (Nr. 4-6) in Sprühapplikationen

### Lackformulierungen:

| | **2-1** | **2-2** | **2-3** | **2-4 bis 2-6** |
|---|---|---|---|---|
| | | | | |

| **Komponente A** | | | | |
|---|---|---|---|---|
| Setalux D A HS 1272 (ca.72% in BA) | 53,64 | 53,64 | 53,64 | 53,66 |
| Byk 331 | 0,29 | 0,29 | 0,29 | 0,29 |
| Byk 141 | 0,14 | 0,14 | 0,14 | 0,14 |
| Tinuvin 292 (50%ig in BA) | 0,57 | 0,57 | 0,57 | 0,58 |
| Tinuvin 384 - 2 (50%ig in BA) | 0,87 | 0,87 | 0,87 | 0,87 |
| DBTL (1%ig in BA) | 1,73 | | | |
| TIB Kat 216 (1%ig in BA) | | 1,73 | | |
| K-Kat XK 651 (1%ig in BA) | | | 1,73 | |
| BuAc / MPA / Xylol (1/1/1) | 10,22 | 10,22 | 10,22 | 11,11 |

| **Komponente B** | | | | |
|---|---|---|---|---|
| Desmodur N 3900 | 19,20 | 19,20 | 19,20 | 19,21 |
| BuAc / MPA / Xylol (1/1/1) | 13,33 | 13,33 | 13,33 | 14,14 |
| **Summe** | 100,00 | 100,00 | 100,00 | 100,00 |

30 g des Substrats Sylobead MS 548 wurden in Versuchen 2-4 bis 2-6 mit unterschiedlichen Katalysatoren versetzt. Versuch 2-4 enthielt 6 g (20 Gewichts-%) DBTL (Dibutylzinndilaurat). Versuch 2-5 enthielt 6 g (20 Gewichts-%) TIB Kat 216 (Dioctylzinndilaurat). Versuch 2-6 enthielt 6 g (20 Gewichts-%) K-Kat XK 651 (Bismuth-Carboxylat).

Versuche 2-1 bis 2-3 wurden als Vergleichsbeispiele (konventionelle Katalyse) für eine Sprühapplikation unter klassischen Autoreparaturklarlackbedingungen konzipiert.

Versuche 2-4 bis 2-6 wurden jeweils vor der Sprühapplikation über ein Schnellsieb gegossen, in dem sich das geträgerte Katalysatormaterial befand. Danach wurde mit dem Lackmaterial eine analoge Sprühapplikation durchgeführt.

Ein Vergleich der Trocknungseigenschaften ergibt, dass die erfindungsgemäßen Systeme 2-4 bis 2-6 eine wesentlich schnellere Trocknung nach der Applikation zeigten:

| **Versuch** | | **2-1** | **2-2** | **2-3** | **2-4** | **2-5** | **2-6** |
|---|---|---|---|---|---|---|---|
| Trocknung | | | | | | | |
| 30' - 60 °C | T 3 | 4 h 35 min | 6 h 33 min | 5 h 35 min | 30 min | sofort | 1h |

Vergleich der optischen Beschichtungseigenschaften und Verarbeitungszeit:

| **Versuch** | | **2-1** | **2-3** | **2-4** | **2-6** |
|---|---|---|---|---|---|
| **Applikation sofort nach Vermischung der Lacksysteme (Komponenten A+B)** | | | | | |
| Optik: | | | | | |
| Glanz 20° | | 90 | 90 | 90 | 89 |
| Haze | | 19 | 13 | 16 | 22 |

| **Applikation 3 h nach Vermischung der Lacksysteme (Komponenten A+B)** | | | | | |
|---|---|---|---|---|---|
| Optik: | | | | | |
| Glanz 20° (ISO 2813) | | 74 | 87 | 90 | 90 |
| Haze (ASTM D 1003) | | 220 | 94 | 15 | 17 |

In der Applikation sofort nach der Vermischung der Komponenten A und B zeigten alle Lacksysteme gute optische Eigenschaften (hoher Glanz und niedriger Haze). Bei einer Applikation drei Stunden nach Vermischung zeigten nur noch die untersuchten erfindungsgemäßen Systeme 2-4 und 2-6 eine gute Optik und somit eine lange Verarbeitungszeit.

## Patentansprüche

1. Verfahren zur Herstellung eines Polyurethanpolymers, umfassend den Schritt:
I) Vermischen einer ersten Eduktkomponente (100) umfassend ein Polyisocyanat mit einer zweiten Eduktkomponente (200) umfassend eine Verbindung mit Zerewitinoff-aktiven Wasserstoffatomen in einem Mischbehälter (300), wobei eine Reaktionsmischung (400) erhalten wird,
**dadurch gekennzeichnet dass**
die erste Eduktkomponente (100) und/oder die zweite Eduktkomponente (100) vor dem Vermischen in dem Mischbehälter (300) mit einem Katalysatorbett (500) kontaktiert werden und/oder
die Reaktionsmischung (400) mit einem Katalysatorbett (500) kontaktiert wird,
wobei das Katalysatorbett (500) einen auf einem Substrat reversibel sorbierten Katalysator enthält, der Katalysator die Reaktion von Isocyanatgruppen mit sich selbst oder mit Zerewitinoff-aktiven Verbindungen katalysiert
und der Katalysator in die das Katalysatorbett (500) kontaktierende erste Komponente (100), zweite Komponente (200) oder Reaktionsmischung (400) freigesetzt wird,
so dass eine den Katalysator enthaltende Reaktionsmischung (410) erhalten wird.

2. Verfahren gemäß Anspruch 1, wobei:
ein Strom der ersten Eduktkomponente (100) mit einem Strom der zweiten Eduktkomponente (200) in einem Mischer (300) vereinigt wird, wobei ein Strom der Reaktionsmischung (400) erhalten wird
und
wenigstens ein Strom ausgewählt aus dem Strom der ersten Eduktkomponente (100), dem Strom der zweiten Eduktkomponente (200) und dem Strom der Reaktionsmischung (400) durch das Katalysatorbett (500) strömt,
so dass der Katalysator in den durch das Katalysatorbett (500) durchströmenden Strom (100, 200, 400) freigesetzt wird.

3. Verfahren gemäß Anspruch 1 oder 2, wobei der Katalysator derart freigesetzt wird, dass die den Katalysator enthaltende Reaktionsmischung (410) den Katalysator in einem Anteil von ≥ 1 ppm bis ≤ 5000 ppm, bezogen auf das Gewicht der Reaktionsmischung, enthält.

4. Verfahren gemäß einem der Ansprüche 1 bis 3, wobei die Reaktionsmischung (400) das Katalysatorbett (500) kontaktiert und die erste (100) und zweite (200) Eduktkomponente das Katalysatorbett (500) nicht kontaktieren.

5. Verfahren gemäß einem der Ansprüche 1 bis 4, wobei die erste (100) und zweite (200) Eduktkomponente vor dem Vermischen im Mischbehälter (300) keinen Katalysator enthalten.

6. Verfahren gemäß einem der Ansprüche 1 bis 5, wobei das Substrat im Katalysatorbett (500) Partikel umfasst, welche Kanäle aufweisen, die in mindestens einer Raumrichtung eine Ausdehnung von ≥ 1 Angström bis ≤ 50 Angström aufweisen.

7. Verfahren gemäß einem der Ansprüche 1 bis 6, wobei als Katalysator Dimethylzinndilaurat, Dibutylzinndilaurat, Dioctylzinndilaurat, Zinn-bis(dodecylmercaptid), Zinn-bis(2-ethylhexylthioglycolat), Zinndiacetat, Zinnmaleat, Zinn-bisthioglycerol, Octylzinn-tris(2-ethylhexylthioglycolat), Bis(β-methoxycabonylethyl)zinndilaurat, Tetraisopropyltitanat, Tetra-tert-butylorthotitanat, Tetra(2-ethylhexyl)titan und Titan-bis-(ethylacetoacetato) diisopropoxid, Bismut (III)-tris(2-ethylhexanoat), Bismutlaurat oder deren Mischungen ausgewählt wird.

8. Verfahren gemäß einem der Ansprüche 1 bis 7, wobei das Katalysatorbett (500) in Form wenigstens einer austauschbaren Kartusche (600) vorliegt.

9. Verfahren gemäß einem der Ansprüche 1 bis 8, wobei das Katalysatorbett (500) in Form einer Mehrzahl von gegeneinander fluidisch abgedichteten Kanälen vorliegt, welche Substrate und hierauf sorbierten Katalysator enthalten und welche unabhängig voneinander auf Anweisung einer Steuerungseinheit von der erste (100) Eduktkomponente, der zweite (200) Eduktkomponente oder der Reaktionsmischung (400) durchströmt werden.

10. Verfahren gemäß einem der Ansprüche 1 bis 9, wobei das Katalysatorbett vor Beginn des Verfahrens mit einem Lösungsmittel gespült wurde.

11. System zur Herstellung eines Polyurethanpolymers, umfassend einen Mischbehälter (300) zum Vermischen einer ersten (100) und zweiten (200) Eduktkomponente unter Erhalt eines einer Reaktionsmischung (400),
**dadurch gekennzeichnet, dass**
das System wenigstens ein Katalysatorbett (500) aufweist, welches von der ersten (100) oder zweiten (200) Eduktkomponente vor dem Eintreten in den Mischbehälter (300) kontaktiert wird und/oder welches von der Reaktionsmischung (400) vor dem Verlassen des Mischbehälters (300) kontaktiert wird
und wobei das Katalysatorbett (500) einen auf einem Substrat reversibel sorbierten Katalysator zur Katalyse der Reaktion von Isocyanatgruppen mit sich selbst oder mit Zerewitinoff-aktiven Verbindungen enthält.

12. System gemäß Anspruch 11, wobei das Katalysatorbett (500) in Form wenigstens einer austauschbaren Kartusche (600) vorliegt.

13. System gemäß Anspruch 11 oder 12, wobei das Katalysatorbett (500) in Form einer Mehrzahl von gegeneinander fluidisch abgedichteten Kanälen vorliegt, welche Substrate und hierauf sorbierten Katalysator enthalten und welche unabhängig voneinander auf Anweisung einer Steuerungseinheit von der erste (100) Eduktkomponente, der zweite (200) Eduktkomponente oder der Reaktionsmischung (400) durchströmt werden.

14. System gemäß einem der Ansprüche 11 bis 13, wobei das System als Spritzpistole ausgeführt ist mit einer Leitung (320) zum Transport der Reaktionsmischung (400) aus dem Mischbehälter (300) zu einer Düse und das Katalysatorbett in dieser Leitung (320) angeordnet ist.

15. System gemäß einem der Ansprüche 11 bis 13, wobei der Mischbehälter (300) als Mischkopf ausgeführt ist, welcher einen Strom der ersten Eduktkomponente (100) mit einem Strom der zweiten Eduktkomponente (200) vermischt, wobei ein Strom der Reaktionsmischung (400) erhalten wird und
wenigstens ein Strom ausgewählt aus dem Strom der ersten Eduktkomponente (100), dem Strom der zweiten Eduktkomponente (200) und dem Strom der Reaktionsmischung (400) durch das Katalysatorbett (500) strömt,
so dass der Katalysator in den durch das Katalysatorbett (500) durchströmenden Strom (100, 200, 400) freigesetzt wird.
